# DEMANDE DE BREVET EUROPEEN

(11) **EP 2 166 698 A1**
(43) Date de publication de la demande: **24.03.2010**
(21) Numéro de dépôt: 09163531.8
(22) Date de dépôt: 23.06.2009
(51) Int. Cl.: H04L 12/12, H04L 12/403, H04L 12/40

(54) **Mise en veille de noeuds esclaves d'un réseau lin par transmission de message(s) de préparation à la mise en veille avant un message de mise en veille**

(30) Priorité: 18.09.2008 FR 0856278
(71) Demandeur: Peugeot Citroën Automobiles Société Anonyme, 78140 Velizy Villacoublay (FR)
(72) Inventeur: Perez Arzoz, Nuria, 92190 Meudon (FR); Boisserie, Antony, 91320 Wissous (FR)
(74) Mandataire: Vigand, Régis Louis Michel

(57) **Abrégé**

Un procédé est dédié à la mise en veille d'un réseau d'interconnexion local (ou LIN) comprenant un bus (B) auquel sont connectés un noeud maître (NM) et au moins un noeud esclave (NES) de type dit sécuritaire. Ce procédé comprend i) une première étape dans laquelle le noeud maître (NM) transmet sur le bus (B) au moins un message de préparation à la mise en veille qui est destiné à signaler à chaque noeud esclave sécuritaire (NES) qu'il vient de déclencher une procédure de mise en veille pour qu'il se prépare à se mettre en veille réseau, et ii) une seconde étape, postérieure à la première étape, dans laquelle le noeud maître (NM) transmet sur le bus (B) un message de mise en veille destiné à déclencher la mise en veille réseau de chacun des noeuds esclaves. Chaque noeud esclave sécuritaire (NES) est agencé de manière à passer dans un état de veille réseau en l'absence de réception du message de mise en veille qui suit la transmission d'un message de préparation à la mise en veille d'une procédure de mise en veille déclenchée.

## Description

L'invention concerne les réseaux de communication multiplexés appelés réseaux d'interconnexion locale (ou LIN (pour « Local Interconnect Network »)), qui sont par exemple utilisés dans certains véhicules automobiles.

Comme le sait l'homme de l'art, un réseau LIN est un réseau comprenant un bus auquel sont connectés un noeud maître et au moins un noeud esclave de type dit sécuritaire ou non sécuritaire. Un noeud esclave sécuritaire est un noeud (ou élément, ou organe, ou encore équipement) qui présente un mode dégradé fonctionnel activé lorsqu'il a détecté l'absence d'activité sur le bus.

Une absence d'activité sur le bus consiste en une absence de transition dite « dominant-récessif ». L'état dominant (ou « logical low ») correspond à un état électrique bas (niveau forcé à la masse), tandis que l'état récessif (ou « logical high ») correspond à un niveau électrique haut (réseau forcé au niveau électrique de l'alimentation).

Les noeuds esclaves ne transmettent des données dans le bus qu'à condition qu'ils aient été sollicités et dans des fenêtres (ou tranches) temporelles qui leur ont été respectivement allouées.

Le noeud maître est chargé de contrôler le bus et d'observer les noeuds esclaves afin qu'ils partagent leurs données sur le bus. C'est également lui qui décide de chaque période pendant laquelle le réseau LIN doit être mis en veille (dite « réseau »). Il est important de différencier la phase de veille réseau de la phase de veille d'un organe du réseau qui correspond à une diminution de sa consommation de courant.

Dans un réseau LIN la mise en veille réseau se fait au moyen d'une procédure consistant en la transmission par le noeud maître, sur le bus, d'une trame dite système comportant un message de mise en veille destiné à déclencher, dès réception, la mise en veille réseau de chaque noeud esclave. Ce message de mise en veille comprend une commande appelée « cde_sleep ».

Il arrive parfois qu'une trame système comportant un message de mise en veille soit corrompue au niveau d'un noeud esclave, en raison d'une perturbation locale, sans que le noeud maître ne s'en aperçoive. Dans ce cas, il existe une probabilité non négligeable que la trame corrompue soit perdue ou inexploitable localement, ce qui, lorsque cela survient dans un noeud esclave sécuritaire, induit son placement dans le mode dégradé fonctionnel activé jusqu'à la coupure de son alimentation une fois qu'il a détecté l'absence d'activité sur le bus. Ce placement peut poser des problèmes de sécurité (à titre d'exemple non limitatif des essuie-glaces peuvent par exemple se mettre en route intempestivement après l'arrêt d'un véhicule).

On comprendra donc qu'il n'est pas possible de garantir que dans un réseau LIN tous les noeuds esclaves vont effectivement se retrouver dans l'état de veille réseau consécutivement à la transmission d'un message de mise en veille.

Afin de remédier à cet inconvénient, il a été proposé de transmettre plusieurs fois de suite la trame système comportant le message de mise en veille. Cette solution offre de la robustesse au réseau LIN, mais elle n'est pas conforme aux spécifications qui définissent les réseaux LIN. De ce fait, elle s'avère incompatible avec certains types de noeud esclave, qui par conséquent ne peuvent pas faire partie d'un réseau LIN qui la met en oeuvre.

L'invention a donc pour but de remédier à l'inconvénient précité.

Elle propose à cet effet un procédé, dédié à la mise en veille (réseau) d'un réseau d'interconnexion locale (ou LIN) comprenant un bus auquel sont connectés un noeud maître et au moins un noeud esclave, avantageusement de type dit sécuritaire, et comprenant une étape dans laquelle le noeud maître transmet sur ce bus un message de mise en veille destiné à déclencher la mise en veille réseau de chaque noeud esclave.

Ce procédé se caractérise par le fait qu'avant de transmettre un message de mise en veille le noeud maître transmet sur le bus au moins un message de préparation à la mise en veille destiné à signaler à chaque noeud esclave avantageusement sécuritaire un déclenchement de procédure de mise en veille, afin qu'il se prépare à se mettre en veille réseau puis, qu'en l'absence de réception du message de mise en veille de la procédure de mise en veille déclenchée, il passe dans un état de veille réseau.

Le procédé selon l'invention peut comporter d'autres caractéristiques qui peuvent être prises séparément ou en combinaison, et notamment :
- avant de transmettre un message de mise en veille le noeud maître peut transmettre successivement sur le bus au moins deux messages de préparation à la mise en veille réseau ;
- à réception d'un message de préparation à la mise en veille d'une procédure de mise en veille, un noeud esclave avantageusement sécuritaire peut déclencher une temporisation d'une durée choisie, et en l'absence de réception du message de mise en veille de cette procédure de mise en veille à l'expiration de cette temporisation le noeud esclave avantageusement sécuritaire peut passer dans l'état de veille réseau ;
   ➢ à réception d'un message de préparation à la mise en veille d'une procédure de mise en veille suivant la réception d'un précédent message de préparation à la mise en veille de cette même procédure de mise en veille, un noeud esclave avantageusement sécuritaire peut interrompre la temporisation qu'il a précédemment déclenchée et déclencher une nouvelle temporisation d'une durée choisie, éventuellement égale à celle de la précédente temporisation ;
- chaque message de préparation à la mise en veille peut être transmis par le noeud maître dans une trame système ou dans une trame fonctionnelle.

Une trame système est une trame qui n'intervient pas dans le fonctionnel mais à des fins de gestion du réseau, tandis qu'une trame fonctionnelle comporte des signaux qui sont exploités par l'applicatif ;

L'invention propose également un noeud maître, destiné à faire partie d'un réseau d'interconnexion locale (ou LIN) comprenant en outre un bus et au moins un noeud esclave avantageusement de type sécuritaire connecté au bus, et agencé pour transmettre sur ce bus un message de mise en veille chaque fois qu'il veut déclencher une mise en veille réseau de chaque noeud esclave du réseau.

Ce noeud maître se caractérise par le fait qu'il est en outre agencé, avant de transmettre un message de mise en veille, pour transmettre sur le bus au moins un message de préparation à la mise en veille qui est destiné à signaler à chaque noeud esclave avantageusement sécuritaire un déclenchement de procédure de mise en veille afin qu'il se prépare à la mise en veille réseau.

Ce noeud maître peut être également agencé, avant de transmettre un message de mise en veille, de manière à transmettre successivement sur le bus au moins deux messages de préparation à la mise en veille.

Par ailleurs, ce noeud maître peut être également agencé de manière à transmettre chaque message de préparation à la mise en veille dans une trame système ou dans une trame fonctionnelle.

L'invention propose également un noeud esclave avantageusement de type sécuritaire, destiné à faire partie d'un réseau d'interconnexion locale (ou LIN) comprenant en outre un bus et un noeud maître connecté à ce bus et du type présenté ci-avant.

Ce noeud esclave avantageusement sécuritaire se caractérise par le fait qu'il est agencé pour se préparer à se mettre en veille réseau en cas de réception en provenance du noeud maître d'au moins un message de préparation à la mise en veille, destiné à signaler un déclenchement de procédure de mise en veille, et pour passer dans un état de veille réseau en l'absence de réception d'un message de mise en veille d'une procédure de mise en veille déclenchée.

Ce noeud esclave avantageusement sécuritaire peut être également agencé, lorsqu'il a reçu un message de préparation à la mise en veille d'une procédure de mise en veille, pour déclencher une temporisation d'une durée choisie, et, en l'absence de réception du message de mise en veille de cette procédure de mise en veille à l'expiration de cette temporisation, pour passer dans l'état de veille réseau.

Dans ce cas, ce noeud esclave avantageusement sécuritaire peut être également agencé, lorsqu'il a reçu un message de préparation à la mise en veille d'une procédure de mise en veille suivant un précédent message de préparation à la mise en veille de cette même procédure de mise en veille, pour interrompre la temporisation qu'il a précédemment déclenchée et pour déclencher une nouvelle temporisation d'une durée choisie, éventuellement égale à celle de la précédente temporisation.

D'autres caractéristiques et avantages de l'invention apparaîtront à l'examen de la description détaillée ci-après, et des dessins annexés, sur lesquels :

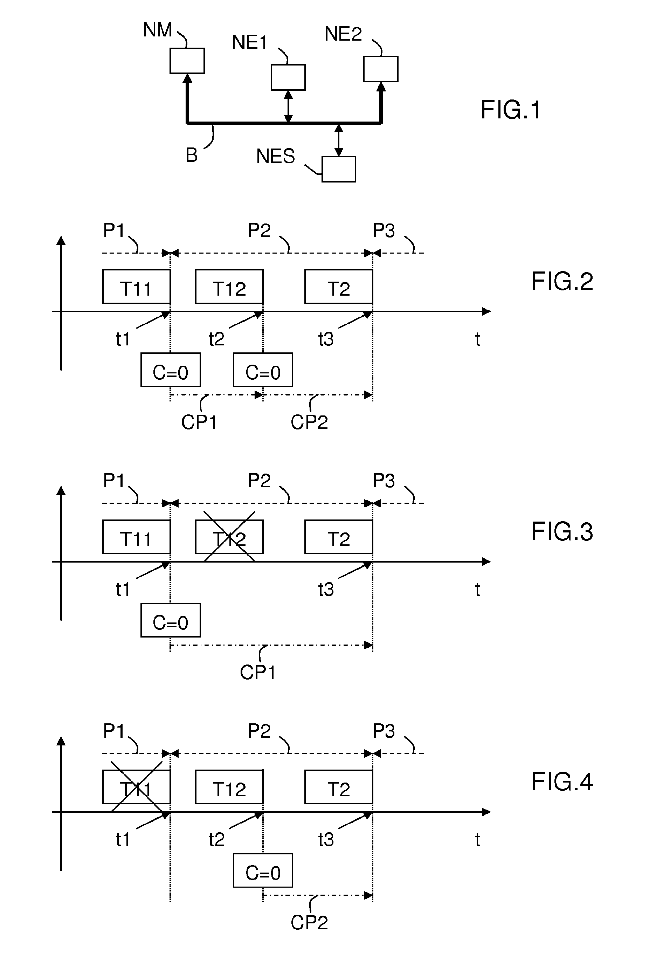

- la figure 1 illustre schématiquement une partie d'un réseau LIN,
- la figure 2 est un premier diagramme temporel matérialisant la transmission de messages de préparation à la mise en veille et d'un message de mise en veille d'une procédure de mise en veille, et les actions déclenchées consécutivement à la réception de tous ces messages par un noeud esclave sécuritaire,
- la figure 3 est un deuxième diagramme temporel matérialisant la transmission de messages de préparation à la mise en veille et d'un message de mise en veille d'une procédure de mise en veille, et les actions déclenchées consécutivement à la réception du premier message de préparation à la mise en veille et du message de mise en veille par un noeud esclave sécuritaire,
- la figure 4 est un troisième diagramme temporel matérialisant la transmission de messages de préparation à la mise en veille et d'un message de mise en veille d'une procédure de mise en veille, et les actions déclenchées consécutivement à la réception du second message de préparation à la mise en veille et du message de mise en veille par un noeud esclave sécuritaire,

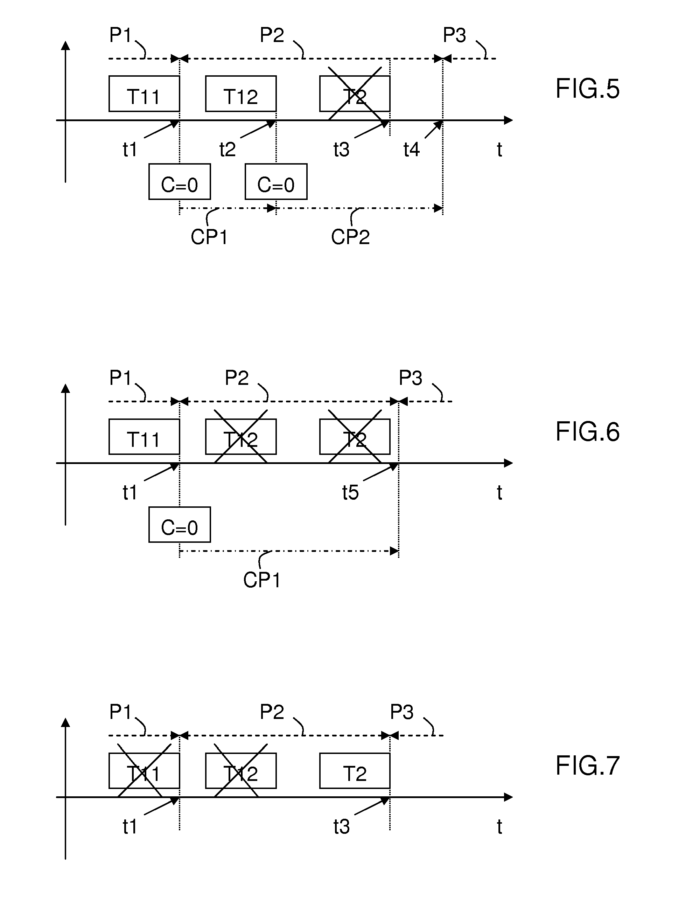

- la figure 5 est un quatrième diagramme temporel matérialisant la transmission de messages de préparation à la mise en veille et d'un message de mise en veille d'une procédure de mise en veille, et les actions déclenchées consécutivement à la réception des premier et second messages de préparation à la mise en veille par un noeud esclave sécu ritai re,
- la figure 6 est un cinquième diagramme temporel matérialisant la transmission de messages de préparation à la mise en veille et d'un message de mise en veille d'une procédure de mise en veille, et les actions déclenchées consécutivement à la réception du seul premier message de préparation à la mise en veille par un noeud esclave sécuritaire, et
- la figure 7 est un sixième diagramme temporel matérialisant la transmission de messages de préparation à la mise en veille et d'un message de mise en veille d'une procédure de mise en veille, et les actions déclenchées consécutivement à la réception du seul message de mise en veille par un noeud esclave sécuritaire.

Les dessins annexés pourront non seulement servir à compléter l'invention, mais aussi contribuer à sa définition, le cas échéant.

L'invention a pour but d'offrir un nouveau procédé de mise en veille (réseau) pour un réseau d'interconnexion locale (ou LIN), et des noeud maître et noeuds esclaves sécuritaires correspondants.

Dans ce qui suit, on considère, à titre d'exemple non limitatif, que le réseau LIN est embarqué dans un véhicule automobile, comme par exemple une voiture. Mais, l'invention n'est pas limitée à cette application.

On a schématiquement représenté sur la figure 1 un exemple de réseau LIN. Il comprend classiquement, et notamment, un bus B auquel sont connectés un noeud maître NM, au moins un noeud esclave NEi (ici i = 1 ou 2) de type dit non sécuritaire et au moins un noeud esclave NES de type dit sécuritaire. Dans cet exemple deux noeuds esclaves non sécuritaires NE1 et NE2 et un seul noeud esclave sécuritaire NES ont été représentés. Mais, un réseau LIN peut comporter plus de deux noeuds esclaves non sécuritaires NEi (ou bien un seul) et plus d'un noeud esclave sécuritaire NES.

Le noeud maître NM et les noeuds esclaves NEi et NES peuvent être de tout type. Par exemple, dans le cas d'une voiture il peut s'agir d'éléments, d'équipements ou d'organes du système de climatisation ou du système de contrôle des translations des vitres ou du système de verrouillage des portes ou encore des essuie-glaces.

Le procédé de mise en veille selon l'invention comprend deux étapes.

Dans une première étape du procédé le noeud maître NM transmet sur le bus B, à destination de tous les noeuds esclaves NEi et NES, au moins un message de préparation à la mise en veille qui est destiné à signaler à chaque noeud esclave sécuritaire NES qu'il vient de déclencher une procédure de mise en veille.

Selon l'invention, lorsqu'un noeud esclave sécuritaire NES reçoit un message de préparation à la mise en veille (d'une procédure de mise en veille) il se prépare à se mettre en veille réseau.

On notera que les noeuds esclaves non sécuritaires NEi n'ont pas besoin de prendre en compte les messages de préparation à la mise en veille car l'absence d'activité réseau suffit à la mise en veille réseau. De ce fait ils sont identiques à ceux de la technique antérieure. En revanche, les noeuds esclaves sécuritaires NES sont modifiés par rapport à ceux de la technique antérieure afin d'être capables de prendre en compte les messages de préparation à la mise en veille.

On notera également que chaque message de préparation à la mise en veille peut être transmis par le noeud maître NM au moyen d'une trame système dédiée, et donc d'un nouveau genre, ou bien d'une trame fonctionnelle faisant partie de sa messagerie.

On notera également que dans le but d'augmenter la probabilité que les noeuds esclaves sécuritaires NES soient avertis du déclenchement d'une procédure de mise en veille, il est avantageux que le noeud maître NM leur transmette successivement, via le bus B, au moins deux messages de préparation à la mise en veille. On comprendra en effet que plus on transmet de messages de préparation à la mise en veille pour une même procédure de mise en veille, plus la probabilité que les noeuds esclaves sécuritaires NES soient avertis est grande. On augmente en effet la probabilité de recevoir un message de préparation à la mise en veille non corrompu.

Dans une seconde étape du procédé, postérieure à la première étape, le noeud maître NM transmet sur le bus B, à destination de tous les noeuds esclaves NEi et NES, un message de mise en veille traditionnel, et donc destiné à déclencher la mise en veille réseau de chacun des noeuds esclaves NEi et NES. Ce message de mise en veille comprend donc classiquement une commande appelée « cde_sleep ».

Chaque noeud esclave sécuritaire NES est modifié de manière à passer dans un état de veille réseau (requis par le noeud maître NM) lorsqu'il n'a pas reçu, consécutivement à la réception d'un message de préparation à la mise en veille d'une procédure de mise en veille déclenchée (et donc après s'être préparé à se mettre en veille réseau), le message de mise en veille de cette même procédure de mise en veille déclenchée.

On comprendra que si un noeud esclave sécuritaire NES reçoit le message de mise en veille d'une procédure de mise en veille déclenchée, il passe dans un état de veille réseau, qu'il ait ou non reçu un message de préparation à la mise en veille de cette même procédure de mise en veille déclenchée (et donc qu'il se soit ou ne se soit pas préparé à se mettre en veille réseau).

La préparation à la mise en veille par un noeud esclave sécuritaire NES peut par exemple consister à déclencher une temporisation d'une durée choisie chaque fois qu'il reçoit un message de préparation à la mise en veille d'une procédure de mise en veille déclenchée. Ainsi, si à l'expiration d'une temporisation qu'il a déclenchée un noeud esclave sécuritaire NES n'a pas reçu le message de mise en veille transmis lors de la seconde étape de cette même procédure de mise en veille il passe automatiquement dans l'état de veille réseau.

Dans ce cas, il est préférable qu'à chaque réception d'un nouveau message de préparation à la mise en veille d'une procédure de mise en veille, un noeud esclave sécuritaire NES interrompe la temporisation qu'il avait précédemment déclenchée (lors de la réception du message précédent de préparation à la mise en veille), puis qu'il déclenche une nouvelle temporisation d'une durée choisie.

On notera que les temporisations successives ont de préférence une même durée choisie. Cette dernière est préférentiellement choisie strictement supérieure à la durée séparant les instants d'émission du dernier message de préparation à la mise en veille et du message de mise en veille d'une procédure de mise en veille, afin d'éviter qu'en cas de transmission de plusieurs messages de préparation à la mise en veille un noeud esclave sécuritaire NES ne se mette en veille réseau trop rapidement.

On notera également qu'une temporisation peut être implémentée sous la forme d'un compteur que l'on incrémente à partir d'une valeur initiale nulle (C=0) en fonction d'une horloge locale, ou bien que l'on décrémente à partir d'une valeur initiale maximale (C=Cmax) en fonction d'une horloge locale.

On va maintenant décrire six situations pouvant survenir dans un noeud esclave sécuritaire NES pendant une procédure de mise en veille, en référence aux diagrammes temporels (t) illustrés sur les figures 2 à 7.

Dans chacune des situations illustrées :
- P1 matérialise la durée d'une phase de fonctionnement (différente d'une phase de veille réseau) qui précède une procédure de mise en veille au niveau d'un noeud esclave sécuritaire NES ;
- P2 matérialise la durée au niveau d'un noeud esclave sécuritaire NES d'une procédure de mise en veille déclenchée par le noeud maître de son réseau LIN ;
- P3 matérialise la durée d'une phase de veille réseau (qui est différente de la phase de veille d'un organe) au niveau d'un noeud esclave sécuritaire NES consécutivement à une procédure de mise en veille réussie ;
- un rectangle comportant l'expression « C=0 » matérialise le déclenchement d'une temporisation par mise à zéro (0) de la valeur d'un compteur ;
- un rectangle comportant la référence « T11 » matérialise la réception par un noeud esclave sécuritaire NES du premier message de préparation à la mise en veille d'une procédure de mise en veille qui en comporte deux ;
- un rectangle comportant la référence « T12 » matérialise la réception par un noeud esclave sécuritaire NES du second message de préparation à la mise en veille d'une procédure de mise en veille qui en comporte deux ;
- un rectangle comportant la référence « T2 » matérialise la réception par un noeud esclave sécuritaire NES du message de mise en veille d'une procédure de mise en veille ;
- un rectangle comportant la référence barrée « T11 », « T12 » ou « T2 » matérialise la non réception par un noeud esclave sécuritaire NES d'un premier ou second message de préparation à la mise en veille ou d'un message de mise en veille (ou ce qui revient au même la réception d'un message corrompu et donc inexploitable) ;
- CP1 matérialise la durée d'une temporisation déclenchée par un noeud esclave sécuritaire NES consécutivement à la réception d'un premier message de préparation à la mise en veille ;
- CP2 matérialise la durée d'une temporisation déclenchée par un noeud esclave sécuritaire NES consécutivement à la réception d'un second message de préparation à la mise en veille ;
- t1 matérialise l'instant de réception d'un premier message de préparation à la mise en veille par un noeud esclave sécuritaire NES ;
- t2 matérialise l'instant de réception d'un second message de préparation à la mise en veille par un noeud esclave sécuritaire NES ;
- t3 matérialise l'instant de réception d'un message de mise en veille par un noeud esclave sécuritaire NES ;
- t4 matérialise l'instant de placement dans un état de veille réseau d'un noeud esclave sécuritaire NES consécutivement à l'expiration d'une seconde temporisation CP2 ;
- t5 matérialise l'instant de placement dans un état de veille réseau d'un noeud esclave sécuritaire NES consécutivement à l'expiration d'une première temporisation CP1.

Dans la première situation illustrée sur la figure 2, un noeud esclave sécuritaire NES reçoit à l'instant t1, via le bus B, un premier message de préparation à la mise en veille T11 non corrompu. Il se prépare donc à la mise en veille réseau en déclenchant une première temporisation CP1. Pour ce faire il peut par exemple mettre à zéro (0) un compteur C. Puis, ce noeud esclave sécuritaire NES reçoit à l'instant t2, via le bus B, un second message de préparation à la mise en veille T12 non corrompu. La durée totale de la première temporisation CP1 n'étant pas écoulée, le noeud esclave sécuritaire NES interrompt cette première temporisation CP1 puis déclenche une seconde temporisation CP2 en remettant à zéro (0) le compteur C. Puis, le noeud esclave sécuritaire NES reçoit à l'instant t3, via le bus B, un message de mise en veille T2 non corrompu, avant que la durée totale de la seconde temporisation CP2 ne soit écoulée. Par conséquent, le noeud esclave sécuritaire NES interrompt cette seconde temporisation CP2 puis passe dans son état de veille réseau du fait qu'il vient de recevoir un message de mise en veille T2 non corrompu.

Dans la deuxième situation illustrée sur la figure 3, un noeud esclave sécuritaire NES reçoit à l'instant t1, via le bus B, un premier message de préparation à la mise en veille T11 non corrompu. Il se prépare donc à la mise en veille réseau en déclenchant une première temporisation CP1. Pour ce faire il peut par exemple mettre à zéro (0) un compteur C. Ce noeud esclave sécuritaire NES ne reçoit pas le second message de préparation à la mise en veille T12. En revanche, il reçoit à l'instant t3, via le bus B, un message de mise en veille T2 non corrompu, avant que la durée totale de la première temporisation CP1 ne soit écoulée. Par conséquent, le noeud esclave sécuritaire NES interrompt cette première temporisation CP1 puis passe dans son état de veille réseau du fait qu'il vient de recevoir un message de mise en veille T2 non corrompu.

Dans la troisième situation illustrée sur la figure 4, un noeud esclave sécuritaire NES ne reçoit pas le premier message de préparation à la mise en veille T11. En revanche, il reçoit à l'instant t2, via le bus B, un second message de préparation à la mise en veille T12 non corrompu. Il se prépare donc à la mise en veille réseau en déclenchant une seconde temporisation CP2. Pour ce faire il peut par exemple mettre à zéro (0) un compteur C. Puis, ce noeud esclave sécuritaire NES reçoit à l'instant t3, via le bus B, un message de mise en veille T2 non corrompu, avant que la durée totale de la seconde temporisation CP2 ne soit écoulée. Par conséquent, le noeud esclave sécuritaire NES interrompt cette seconde temporisation CP2 puis passe dans son état de veille réseau du fait qu'il vient de recevoir un message de mise en veille T2 non corrompu.

Dans la quatrième situation illustrée sur la figure 5, un noeud esclave sécuritaire NES reçoit à l'instant t1, via le bus B, un premier message de préparation à la mise en veille T11 non corrompu. Il se prépare donc à la mise en veille réseau en déclenchant une première temporisation CP1. Pour ce faire il peut par exemple mettre à zéro (0) un compteur C. Puis, ce noeud esclave sécuritaire NES reçoit à l'instant t2, via le bus B, un second message de préparation à la mise en veille T12 non corrompu. La durée totale de la première temporisation CP1 n'étant pas écoulée, le noeud esclave sécuritaire NES interrompt cette première temporisation CP1 puis déclenche une seconde temporisation CP2 en remettant à zéro (0) le compteur C. Le noeud esclave sécuritaire NES n'ayant pas reçu (à l'instant t3) de message de mise en veille T2, la seconde temporisation CP2 continue de s'écouler jusqu'à ce qu'elle parvienne à son terme à l'instant t4. A cet instant t4, le noeud esclave sécuritaire NES passe dans son état de veille réseau du fait qu'il est agencé pour se placer dans cet état de veille réseau lorsqu'une temporisation (ici CP2) a expirée sans qu'il ait reçu de message de mise en veille T2.

Dans la cinquième situation illustrée sur la figure 6, un noeud esclave sécuritaire NES reçoit à l'instant t1, via le bus B, un premier message de préparation à la mise en veille T11 non corrompu. Il se prépare donc à la mise en veille réseau en déclenchant une première temporisation CP1. Pour ce faire il peut par exemple mettre à zéro (0) un compteur C. Ce noeud esclave sécuritaire NES ne reçoit ni le second message de préparation à la mise en veille T12 ni le message de mise en veille T2 (qui aurait dû survenir à l'instant t3). La première temporisation CP1 continue donc de s'écouler jusqu'à ce qu'elle parvienne à son terme à l'instant t5. On notera que ce dernier survient après l'instant t3 de réception du message de mise en veille T2 car dans le cas contraire la réception du message de mise en veille T2 serait interprétée comme une activité et provoquerait un réveil réseau. Par conséquent, à l'instant t5, le noeud esclave sécuritaire NES passe dans son état de veille réseau du fait qu'il est agencé pour se placer dans cet état de veille réseau lorsqu'une temporisation (ici CP1) a expirée sans qu'il ait reçu de message de mise en veille T2.

Dans la sixième situation illustrée sur la figure 7, un noeud esclave sécuritaire NES ne reçoit ni le premier message de préparation à la mise en veille T11, ni le second message de préparation à la mise en veille T12. En revanche, ce noeud esclave sécuritaire NES reçoit à l'instant t3, via le bus B, un message de mise en veille T2 non corrompu. Par conséquent, le noeud esclave sécuritaire NES passe dans son état de veille réseau du fait qu'il vient de recevoir un message de mise en veille T2 non corrompu.

L'invention ne se limite pas aux modes de réalisation de procédé de mise en veille, de noeud maître et de noeud esclave sécuritaire décrits ci-avant, seulement à titre d'exemple, mais elle englobe toutes les variantes que pourra envisager l'homme de l'art dans le cadre des revendications ci-après.

## Revendications

1. Procédé de mise en veille d'un réseau d'interconnexion locale (ou LIN) comprenant un bus (B) auquel sont connectés un noeud maître (NM) et au moins un noeud esclave (NES), ledit procédé comprenant une étape dans laquelle ledit noeud maître (NM) transmet sur ledit bus (B) un message de mise en veille destiné à déclencher la mise en veille réseau de chaque noeud esclave, **caractérisé en ce qu'**avant de transmettre ledit message de mise en veille ledit noeud maître (NM) transmet sur ledit bus (B) au moins un message de préparation à la mise en veille destiné à signaler à chaque noeud esclave (NES) un déclenchement de procédure de mise en veille, de sorte qu'il se prépare à se mettre en veille réseau puis, qu'en l'absence de réception dudit message de mise en veille de ladite procédure de mise en veille déclenchée, il passe dans un état de veille réseau.

2. Procédé selon la revendication 1, **caractérisé en ce qu'**avant de transmettre ledit message de mise en veille ledit noeud maître (NM) transmet successivement sur ledit bus (B) au moins deux messages de préparation à la mise en veille.

3. Procédé selon l'une des revendications 1 et 2, **caractérisé en ce qu'**à réception d'un message de préparation à la mise en veille d'une procédure de mise en veille un noeud esclave (NES) déclenche une temporisation d'une durée choisie, et en l'absence de réception du message de mise en veille de cette procédure de mise en veille à l'expiration de ladite temporisation ledit noeud esclave (NES) passe dans ledit état de veille réseau.

4. Procédé selon la revendication 3, **caractérisé en ce qu'**à réception d'un message de préparation à la mise en veille d'une procédure de mise en veille suivant la réception d'un précédent message de préparation à la mise en veille de cette même procédure de mise en veille, un noeud esclave (NES) interrompt la temporisation précédemment déclenchée et déclenche une nouvelle temporisation d'une durée choisie.

5. Procédé selon la revendication 4, **caractérisé en ce que** lesdites temporisations successives ont une même durée choisie.

6. Procédé selon l'une des revendications 1 à 5, **caractérisé en ce que** ledit noeud maître (NM) transmet chaque message de préparation à la mise en veille dans une trame choisie dans un groupe comprenant une trame système et une trame fonctionnelle.

7. Noeud maître (NM) pour un réseau d'interconnexion locale (ou LIN) comprenant en outre un bus (B) et au moins un noeud esclave (NES) connecté audit bus (B), ledit noeud maître (NM) étant agencé pour transmettre sur ledit bus (B) un message de mise en veille chaque fois qu'il veut déclencher une mise en veille réseau de chaque noeud esclave dudit réseau, **caractérisé en ce qu'**il est en outre agencé, avant de transmettre un message de mise en veille, pour transmettre sur ledit bus (B) au moins un message de préparation à la mise en veille destiné à signaler à chaque noeud esclave (NES) un déclenchement de procédure de mise en veille afin qu'il se prépare à la mise en veille réseau.

8. Noeud maître selon la revendication 7, **caractérisé en ce qu'**il est agencé, avant de transmettre un message de mise en veille, pour transmettre successivement sur ledit bus (B) au moins deux messages de préparation à la mise en veille.

9. Noeud maître selon l'une des revendications 7 et 8, **caractérisé en ce qu'**il est agencé pour transmettre chaque message de préparation à la mise en veille dans une trame choisie dans un groupe comprenant une trame système et une trame fonctionnelle.

10. Noeud esclave (NES) pour un réseau d'interconnexion locale (ou LIN) comprenant en outre un bus (B) et un noeud maître (NM) connecté audit bus (B), **caractérisé en ce qu'**il est agencé pour se préparer à se mettre en veille réseau en cas de réception en provenance dudit noeud maître (NM) d'au moins un message de préparation à la mise en veille, destiné à signaler un déclenchement de procédure de mise en veille, et pour passer dans un état de veille réseau en l'absence de réception d'un message de mise en veille d'une procédure de mise en veille déclenchée.

11. Noeud esclave selon la revendication 10, **caractérisé en ce qu'**il est agencé, en cas de réception d'un message de préparation à la mise en veille d'une procédure de mise en veille, pour déclencher une temporisation d'une durée choisie, et, en l'absence de réception du message de mise en veille de cette procédure de mise en veille à l'expiration de ladite temporisation, pour passer dans ledit état de veille réseau.

12. Noeud esclave selon la revendication 11, **caractérisé en ce qu'**il est agencé, en cas de réception d'un message de préparation à la mise en veille d'une procédure de mise en veille suivant un précédent message de préparation à la mise en veille de cette même procédure de mise en veille, pour interrompre la temporisation précédemment déclenchée et pour déclencher une nouvelle temporisation d'une durée choisie.

13. Noeud esclave selon la revendication 12, **caractérisé en ce qu'**il est agencé pour déclencher des temporisations successives d'une même durée choisie.
